# EUROPEAN PATENT APPLICATION

(11) **EP 2 595 030 A2**
(43) Date of publication of application: **22.05.2013**
(21) Application number: 12191728.0
(22) Date of filing: 08.11.2012
(51) Int. Cl.: G06F 1/16, G09G 5/00

(54) **Thin display**

(30) Priority: 15.11.2011 TW 100221526
(71) Applicant: Pegatron Corporation, Taipei City 112 (TW)
(72) Inventor: WANG, Wen-Hung, 112 Taipei City (TW)
(74) Representative: Chamberlain, Alan James

(57) **Abstract**

A thin display for pivotally connecting a main body of notebook PC is provided. The thin display includes a back cover, a front frame and a display module. The front frame is assembled to the back cover. The display module is assembled to and between the back cover and front frame. The display module abuts against the back cover or keeps a gap equal to or less than 0.5 mm with the back cover.

## Description

### TECHNICAL FIELD

The disclosure relates to a display, more specifically, to a thin display.

### BACKGROUND

In an era of booming information, electronic products have been closely linked to our daily lives. As technology advances, electronic products that are lighter and thinner also keep hitting the market.

As to the development of personal computers, desktop personal computers were first developed, however, they are rather heavy and have the drawbacks of being difficult to carry and so on. Notebook personal computers that are easy to carry were later developed.

The display module of a display is assembled between the back cover and the front frame in the electronic devices. Generally speaking, to avoid damages to the display module because of the pressured back cover, one conventional means is to leave a relative large gap between the back cover and the display module. This, though, may prevent the back cover from touching the display module when being pressured, it will also increase the overall thickness of the display. It is worth noting that if the gap between the display module and the back cover is too wide, the back cover deformed by an external force may have a smaller contact area with the display module, while the display module may be under greater pressure and more likely prone to damages, and thus resulting in decreased display quality. In the worst case scenario, the display module may be broken as a result of greater pressure. Another conventional means is to add a buffer between the back cover and the display module, so as to disperse the force applied on the back cover. This, though, may lower the risks of causing damages to the display module, it may also increase the overall thickness of the display. In recent years, many manufacturers have launched notebook PCs that are characterized to be super thin. If the above conventional means is adopted to lower the risks of damages resulting from the pressure on the back cover, the goal of creating a thin design may not be achieved.

Furthermore, an "open cell" module can be adopted in assembling liquid crystal display panels to realize the goal of thin design. It can be tailor-made by assembling backlight plates, diffusive sheets, glass substrates and so on between the back cover and the front frame respectively. However, such a customization is too expensive and time-wasting and cannot use liquid display panels that are mass-produced. Thus, the method is not widely used.

### SUMMARY

The embodiment of the invention provides a thin display, which may lower the risks of damages to its display module because of pressure on its back cover.

The thin display of the embodiment is for pivotally connected to a main body of notebook PC, including a back cover, a front frame and a display module. The front frame is assembled to the back cover. The display module is assembled between the back cover and the front frame. The display module abuts against the back cover or keeps a gap equal to or less than 0.5 mm with the back cover.

According to an embodiment of the invention, the display module is a liquid crystal display module.

According to an embodiment of the invention, the back cover is an aluminum cover or a fiberglass reinforced plastic cover.

In one embodiment of the invention, the main body of notebook PC has a keyboard.

Based on the above, the display module of the invention abuts against the back cover or keeps a gap equal to or less than 0.5 mm with the back cover. Accordingly, the risks of damaging the display module because of pressure on the back cover may be lowered.

In order to make the aforementioned and other features and advantages of the present invention more comprehensible, several embodiments accompanied with figures are described in detail below.

### BRIEF DESCRIPTION OF THE DRAWINGS

Fig. 1 is a schematic view of a thin display used in an electronic device according to one embodiment of the invention.

Fig. 2 is a cross-sectional view of the screen along line A-A in Fig. 1.

Fig. 3 is a partial cross-sectional view according to another embodiment of the invention.

### DETAILED DESCRIPTION OF DISCLOSED EMBODIMENTS

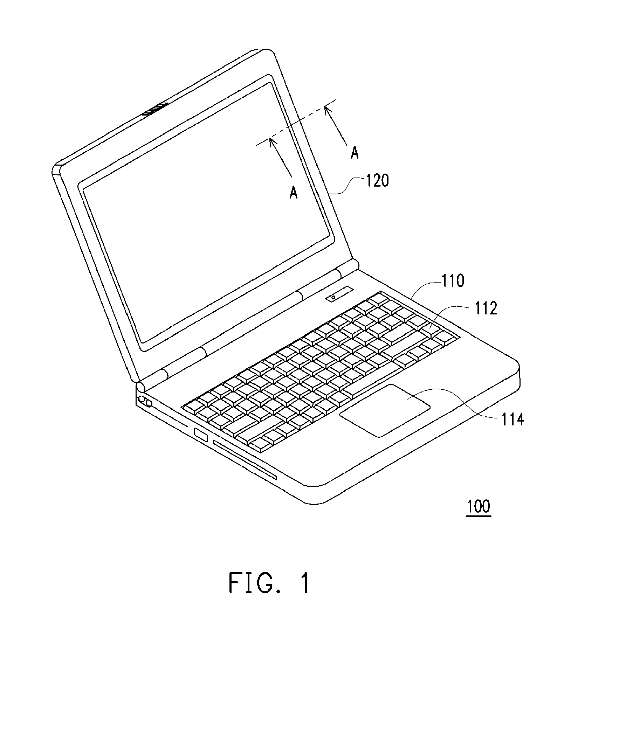

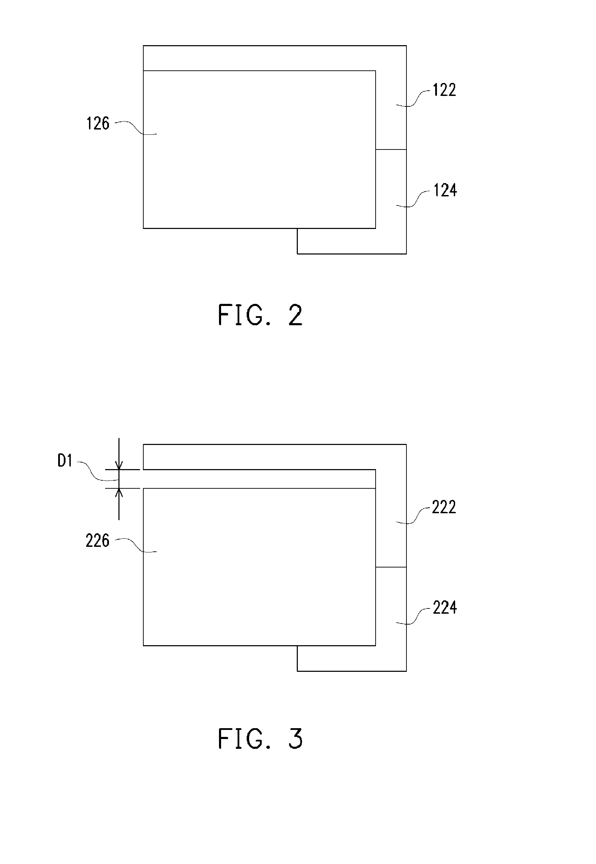

Fig. 1 is a schematic view of a thin display used in an electronic device according to one embodiment of the invention. Fig. 2 is a cross-sectional view of the screen along a line A-A in Fig. 1. Referring to Fig. 1 and Fig. 2, in this embodiment, the electronic device 100 is, for example, a notebook PC, which includes a main body of notebook PC 110 and a thin display 120. The thin display 120 is pivotally connected to the main body of notebook PC 110, so that the thin display 120 may be rotatably open relative to the main body of notebook PC 110.

Based on the above, the thin display 120 includes a back cover 122, a front frame 124 and a display module 126. The front frame 124 is assembled to the back cover 122. The display module 126 is assembled between the back cover 122 and the front frame 124. The display module 126 of this embodiment abuts against the back cover 122.

In such an arrangement, the display module 126 may be moved along with the back cover 122 and cause deformation when an external force in applied on the back cover 122. The embodiment of this invention is to reduce the distance between the display module and the back cover as much as possible. Once the back cover is bended and deformed when an external force is applied on it, the back cover and the display module closer to it can be regarded as plane contact to each other rather than point contact to each other. The two will deform together because of the average load on each of them and move together like composite materials. The destruction force from stress concentration is thus reduced and the external force is thereby borne and shared together. Therefore, the back cover may bear greater external force without having the problem of damaging the display module 126 easily.

Furthermore, the back cover 122 in this embodiment may be made of high strength materials such as aluminum or fiberglass reinforced plastic and so on. As a result, the deformation of the back cover 122 on which an external force is applied may be reduced and the acting force borne by the display module 126 may also be reduced, and thus the risks of the display module 126 being damaged may be further lowered.

On the other hand, the display module 126 abuts against the front frame 124 in this embodiment. The display module 126 may be a liquid crystal display module, however, this embodiment is not limited herein. The relevant electronic devices (not shown) in the display module 126 such as backlight module, display panel and so on have been shown in prior art and are thus not reiterated herein.

In addition, the main body of notebook PC 110 has a keyboard 112 and a touch panel 114. However, this embodiment is not limited herein.

Fig. 3 is a partial cross-sectional view according to another embodiment of the invention. Referring to Fig. 3, the electronic device (not shown) is similar to the electronic device 100 of Fig. 1. The difference between the two lies in a gap D1 between the display module 226 and the back cover 222. In this embodiment, the gap D1 between the display module 226 and the back cover 222 is less than or equal to 0.5 mm. In other words, the display module 226 keeps a gap equal to or less than 0.5 mm with the back cover 222.

In such an arrangement, the back cover 222 will start undergoing deformation when an external force is applied on it. The back cover 222 in continuous deformation will soon reach the display module 226 since the gap is very small. The back cover 222 deformed by an external force will have a greater contact area with the display module 226 by reducing the gap D1 between the display module 226 and the back cover 222, so as to disperse the external force and reduce the chance of damaging the display module 226.

In sum of the above, the display module of the invention abuts against the back cover or keeps a gap equal to or less than 0.5 mm with the back cover. Accordingly, the chance of the back cover being suppressed thereby damaging the display module may be reduced when an external force is applied on the back cover. After theoretical calculations and practical verifications, the result is the best when the gap is 0; on the contrary, the destruction rate of the display module is higher if the gap is greater. After verifications, if the back cover is an element having pressure resistance, the pressure on each square unit area may be effectively reduced and the result is the best when the gap between the back cover and the display module is 0; on the contrary, the greater the gap, the worse the result. Thus, the gap between the back cover and the display module is less than or equal to 0.5 mm. Furthermore, the deformation of the back cover because of external force may be further reduced if the back cover is made of materials such as aluminum, other metals or fiberglass reinforced plastic. The risks of the display module being damaged may be further lowered because of less acting force borne by the display module.

Moreover, disposing a buffer material between the display module and the back cover as in conventional means to help reduce deformation of the back cover after being applied with an external force and protect the display module is not required for this design. Therefore, the thin display of the invention may simplify the assembling process and further save time as well as reduce the overall thickness of the thin display to realize the goal of thin design.

Although the invention has been described with reference to the embodiments thereof, the invention is not limited therein. It will be apparent to persons of ordinary skill in the art that modifications to the described embodiments may be made without departing from the spirit of the invention. Accordingly, the scope of the invention should be defined by the attached claims not by the above detailed descriptions.

## Claims

1. A thin display (100) for pivotally connecting a main body (110) of notebook PC, comprising:
a back cover (122, 222);
a front frame (124, 224) assembled to the back cover (122, 222); and
a display module (126, 226) assembled between the back cover (122, 222) and the front frame (124, 224), wherein the display module (126, 226) abuts against the back cover (122, 222) or keeps a gap (D1) equal to or less than 0.5 mm with the back cover (122, 222).

2. The thin display (100) of claim 1, wherein the display module (126, 226) is a liquid crystaldisplay module.

3. The thin display (100) of claim 1, wherein the back cover (122, 222) is an aluminum back cover, other metal cover or fiberglass reinforced plastic back cover.

4. The thin display (100) of claim 1, wherein the main body (110) of notebook PC has a keyboard (112).
